# EUROPÄISCHE PATENTSCHRIFT

(11) **EP 2 232 449 B1**
(45) Veröffentlichungstag und Bekanntmachung des Hinweises auf die Patenterteilung: **08.08.2012**
(21) Anmeldenummer: 09700987.2
(22) Anmeldetag: 09.01.2009
(51) Int. Cl.: G07C 9/00, H04B 1/16

(54) **VERFAHREN ZUR STEUERUNG EINES MOBILEN IDENTIFIKATIONSGEBERS**
METHOD FOR CONTROLLING A MOBILE IDENTIFICATION TRANSMITTER
PROCÉDÉ DE COMMANDE D'UN CAPTEUR D'IDENTIFICATION MOBILE

(30) Priorität: 11.01.2008 DE 102008004111
(43) Veröffentlichungstag der Anmeldung: 29.09.2010
(73) Patentinhaber: Huf Hülsbeck & Fürst GmbH & Co. KG, 42551 Velbert (DE)
(72) Erfinder: SCHINDLER, Mirko, 42549 Velbert (DE); SIMON, Jörg, 42489 Wülfrath (DE); SCHUMACHER, Helmut, 48653 Coesfeld (DE)
(74) Vertreter: Vogel, Andreas
(86) Internationale Anmeldenummer: PCT/EP2009/050207
(87) Internationale Veröffentlichungsnummer: WO 2009/087211

(56) Entgegenhaltungen:
- DE-A1- 10 112 027
- DE-A1- 19 916 308
- DE-A1-102005 043 893
- GB-A- 2 225 658
- US-A- 5 804 894
- US-B1- 6 697 953

## Beschreibung

Die vorliegende Erfindung betrifft ein Verfahren zur Steuerung eines mobilen Identifikationsgebers für ein Sicherheitssystem eines Fahrzeuges gemäß Anspruch 1. Des Weiteren betrifft die vorliegende Erfindung einen mobilen Identifikationsgeber gemäß Anspruch 9. gemäß Anspruch 9.

In der Offenlegungsschrift DE 34 46 245 A1 ist ein mobiler Identifikationsgeber - auch mobiler ID-Geber - gezeigt. Dieser mobile ID-Geber dient zur Identifizierung eines berechtigten Benutzers. Dazu wird zwischen dem mobilen Identifikationsgeber und einer fahrzeugseitigen Vorrichtung, wie etwa einem Schließsystem, im Rahmen einer Kommunikation ein Code ausgetauscht. Nach einer positiven Auswertung des Codes ist es dem Benutzer möglich, einen beweglichen Teil, wie etwa eine Tür, zu öffnen. Zur Übermittlung des Codes weist der mobile ID-Geber eine Elektronikeinheit mit einer Sende-/Empfangseinheit auf. Gespeist wird die Elektronikeinheit mittels eines Energiespeichers, wie etwa einer Batterie. In der oben genannten Offenlegungsschrift wird ein Verfahren beschrieben, welches einem Benutzer ermöglicht, auch bei nahezu entleertem Energiespeicher noch Zugang zu einem Kraftfahrzeug zu erlangen. Dazu übermittelt der mobile Identifikationsgeber kurz vor dem völligen Verbrauch des Energiespeichers ein entsprechendes Signal an das Sicherheitssystem des Kraftfahrzeuges, um dieses zu veranlassen auf einen manuellen Betrieb umzuschalten. Im Anschluss daran kann der Benutzer einen manuellen Notschlüssel verwenden, um das Fahrzeug zu öffnen bzw. zu schließen. Als nachteilig hat es sich herausgestellt, dass die Nutzung solcher Art mobiler Identifikationsgeber sehr unbequem für den Benutzer ist, da nach der Entleerung des Energiespeichers das Sicherheitssystem manuell entriegelt werden muss.

Die DE 101 120 27 A1 zeigt eine mit einem Display ausgestattete Fernbedienung für das Ansteuern eines Türschloss von einem Kraftfahrzeuges, wobei das Display so ausgestaltet ist, dass es sich nach einer gewissen Zeit von selbst ausschaltet bzw. alternativ vom Fahrer manuell ausgeschaltet werden kann.

Es ist Aufgabe der vorliegenden Erfindung ein Verfahren zur zuverlässige Steuerung eines mobiles Identifikationsgeber für ein Sicherheitssystem eines Fahrzeuges zu schaffen.

Zur Lösung dieser Aufgabe wird ein Verfahren mit den Merkmalen des Anspruches 1 vorgeschlagen. Darüber hinaus wird zur Lösung dieser Aufgabe ein mobiler Identifikationsgeber mit den Merkmalen des Anspruches 9 vorgeschlagen. In den abhängigen Ansprüchen sind jeweils bevorzugte Weiterbildungen ausgeführt. Merkmale und Details, die im Zusammenhang mit dem erfindungsgemäßen Verfahren beschrieben sind, gelten dabei selbstverständlich auch im Zusammenhang mit dem erfindungsgemäßen mobilen Identifikationsgeber und jeweils umgekehrt.

Es ist erfindungsgemäß vorgesehen, dass der mobile Identifikationsgeber ein Display aufweist, die Energiemenge des Energiespeichers von der Überwachungseinheit mit wenigstens einer Energieschwelle verglichen wird, und ein Funktionszustand des Displays in Abhängigkeit von einem Verhältnis der Energiemenge zu der Energieschwelle gesteuert wird.

Der Kern des erfindungsgemäßen Verfahrens besteht darin, dass zum einen der mobile Identifikationsgeber ein Display aufweist, auf welchem vorzugsweise Informationen über einen Status des mobilen Identifikationsgebers dargestellt werden. Kombiniert wird dieses Display mit einer Überwachungseinheit, welche einen Energiegehalt des Energiespeichers überwacht. Da das Display einen höheren Energiebedarf als die Elektronikeinheit des mobilen Identifikationsgebers aufweist, kann der Funktionszustand des Displays in Abhängigkeit von der Energiemenge des Energiespeichers gesteuert werden. Dadurch ist sichergestellt, dass die Energie des Energiespeichers vorrangig der Elektronikeinheit zur Datenkommunikation zur Verfügung gestellt wird. Solange die Energiemenge des Energiespeichers ausreicht, werden sämtliche Statusinformationen auf dem Display dargestellt. Ist die Energiemenge des Energiespeichers unterhalb eine vordefinierte Energieschwelle gesunken, wechselt der Funktionszustand des Displays. So ist sichergestellt, dass die verbleibende Energiemenge ausschließlich zur Datenkommunikation mit dem fahrzeugseitigen Teil genutzt werden kann. Folglich kombiniert das erfindungsgemäße Verfahren sowie der erfindungsgemäße ID-Geber die Vorzüge des Displays mit der Möglichkeit dieses in verschiedene Funktionszustände zu überführen, um eine funktionssichere Nutzung des mobilen ID-Gebers zu erzielen. Damit ergibt sich ein Identifikationsgeber der ein Energie-autarkes System zur Bereitstellung eines Funksignals aufweist.

Eine vorteilhafte Ausführungsvariante des erfindungsgemäßen Verfahrens zeichnet sich dadurch aus, dass von dem Display einer der folgenden Funktionszustände eingenommen wird: ein aktiver Funktionszustand oder ein passiver Funktionszustand. Vorteilhafterweise zeichnet sich der aktive Funktionszustand dadurch aus, dass mittels des Displays ein Status des mobilen Identifikationsgebers angezeigt wird. Im Gegensatz zu dem aktiven Funktionszustand zeichnet sich der passive Funktionszustand dadurch aus, dass das Display in einem energieversorgungsfreien Zustand ist. Als energieversorgungsfreier Zustand wird im Rahmen der Erfindung jener Zustand des Displays beschrieben, in dem dieses keine Energie aus dem Energiespeicher verbraucht. Der passive Funktionszustand kann beispielsweise durch ein unmittelbares oder mittelbares Trennen des Displays von dem Energiespeicher erfolgen. Ebenfalls ist es möglich, dass das Display durch die Überwachungseinheit und/oder die Elektronikeinheit ausgeschaltet wird. Da im passiven Funktionszustand das Display keine Energie aus dem Energiespeicher verbracht, wird die Energiemenge des Energiespeichers nur durch die Nutzung der Elektronikeinheit reduziert.

Aufgrund der für den Betrieb des Displays ausgelegten Energiemenge des Energiespeichers ist sichergestellt, dass nach dem Übergang des Displays aus dem aktiven in den passiven Funktionszustand ein Benutzer weiterhin den mobilen Identifikationsgeber nutzen kann. Dazu hat es sich als vorteilhaft erwiesen, wenn mittels der Überwachungseinheit in Abhängigkeit von der Energiemenge und/oder der Energieschwelle des Energiespeichers ein reversibler Wechsel zwischen dem aktiven Funktionszustand und dem passiven Funktionszustand gesteuert wird. Das Display dient zur benutzerfreundlichen Anzeige des Status des mobilen Identifikationsgebers und/oder des fahrzeugseitigen Teiles. Allerdings verbraucht das Display dabei Energie aus dem Energiespeicher. Sinkt die Energiemenge des Energiespeichers unter die im Vorhinein festgelegte Energieschwelle, so überführt die Überwachungseinheit das Display aus dem aktiven Funktionszustand in den passiven Funktionszustand. Es ist dann einem Benutzer nicht mehr möglich, den Status auf dem Display angezeigt zu bekommen. Wird allerdings die Energiemenge des Energiespeichers wieder aufgefüllt, kann die Überwachungseinheit dieses registrieren und entsprechend den Funktionszustand des Displays von dem passiven in den aktiven Zustand zurücksetzen. Das Aufladen des Energiespeichers kann beispielsweise durch ein Anschließen des ID-Gebers an ein Stromnetz geschehen.

Eine weitere Ausführungsform des erfindungsgemäßen Verfahrens zeichnet sich dadurch aus, dass in einem schlafenden Funktionszustand vom Display nur ein Bruchteil der Energie verbraucht wird. Der schlafende Funktionszustand ist neben dem aktiven und dem passiven Zustand ein dritter Funktionszustand den das Display einnehmen kann. Vorteilhafterweise handelt es sich bei dem schlafenden Funktionszustand um eine Einstellung des Displays, in dem dieses eine Bereitschaftsstellung für eine zukünftige Anzeige des Status des fahrzeugseitigen Teiles einnimmt. So kann beispielsweise eine Hintergrundbeleuchtung des Displays ausgeschaltet werden. Möchte der Benutzer den Status des mobilen Identifikationsgebers auf dem Display angezeigt bekommen, genügt es ein Betätigungselement zu betätigen und so das Display aus dem schlafenden in den aktiven Funktionszustand zu überführen. Anschließend können die gewünschten Informationen auf dem Display dargestellt werden. Als vorteilhaft hat es sich herausgestellt, wenn das Display nach Ablauf einer Zeitspanne in den schlafenden Funktionszustand versetzt wird. In einer Ausgestaltung bestimmt die Elektronikeinheit jenen Zeitpunkt, zu welchem das Display zuletzt genutzt wurde. Ist der seitdem verstrichene Zeitraum größer als die vordefinierte Zeitspanne, wird das Display automatisch in den schlafenden Funktionszustand (auch Standby-Modus) versetzt. Die Verwendung des schlafenden Funktionszustandes erhöht die Funktionsdauer des erfindungsgemäßen mobilen Identifikationsgebers. Häufig nutzt ein Benutzer das Display zur Anzeige des Status des mobilen Identifikationsgebers nur sehr periodisch. Durch den schlafenden Funktionszustand wird die Energiemenge des Energieträgers geschont, ohne dass der Benutzer auf die Vorzüge des Displays in dem aktiven Funktionszustand verzichten muss.

Weiterhin hat es sich als vorteilhaft erwiesen, wenn mittels der Überwachungseinheit in Abhängigkeit von einer zweiten Energieschwelle des Energiespeichers ein reversibler Wechsel zwischen dem aktiven Funktionszustand und dem schlafenden Funktionszustand gesteuert wird. Neben dem oben beschriebenen Übergang des Displays aus dem aktiven in den schlafenden Funktionszustand nach Ablauf einer vordefinierten Zeitspanne wird in diesem Ausführungsbeispiel der Übergang durch die zweite Energieschwelle geregelt. Die zweite Energieschwelle sollte bei einer höheren Energiemenge angelegt sein als die Energieschwelle, welche zum Übergang des Displays aus dem aktiven in den passiven Funktionszustand genutzt wird. Durch die Nutzung einer zweiten Energieschwelle ist sichergestellt, dass nach einem leichten Abfall der Energiemenge innerhalb des Energiespeichers das Display automatisch in den schlafenden Funktionszustand überführt wird. Dieses ist dann unabhängig von der verstrichenen Zeit seit der letzten Nutzung. Somit wird erreicht, dass nach einer Nutzung des Displays in dem aktiven Funktionszustand automatisch der schlafende Funktionszustand eingeleitet wird, sobald das Display nicht mehr zur Anzeige von Informationen genutzt wird.

In einer weiteren vorteilhaften Ausführungsvariante wird bei einer Aktivierung des Betätigungselementes von der Elektronikeinheit die Datenkommunikation aufgebaut. Bei dem Betätigungselement kann es sich um einen Schalter, Taster oder dergleichen handeln, welches auf einem Gehäuse des mobilen ID-Gebers angeordnet ist. Möchte der Benutzer über den mobilen ID-Geber mit dem fahrzeugseitigen Teil in Kontakt treten, so bedarf es nur der Betätigung des Betätigungselementes. Dadurch wird in der Elektronikeinheit ein entsprechendes Codesignal generiert, welches über die Datenkommunikation an den fahrzeugseitigen Teil übermittelt wird. Weiterhin hat es sich als vorteilhaft erwiesen, die Energieschwelle derart zu wahlen, dass auch im passiven Funktionszustand die Elektronikeinheit die Datenkommunikation in Abhängigkeit von der Aktivierung des Betätigungselementes aufbaut. So wird auch nach Überführen des Displays in den passiven Funktionszustand weiterhin von dem mobilen Identifikationsgeber über die Datenkommunikation ein Codesignal und/oder eine Information an den fahrzeugseitigen Teil übermittelt. Folglich kann auch nach der Überführung des Displays in den passiven Funktionszustand der mobile ID-Geber weiter genutzt werden, um die Zentralverriegelung eines Kraftfahrzeuges über die Datenkommunikation zu ent- oder verriegeln. Aufgrund der von der Überwachungseinheit überwachten Energieschwelle weist der Energiespeicher eine Energiemenge auf, welche groß genug ist, um eine mehrfache Übermittlung des Codesignales über die Datenkommunikation sicherzustellen. Es hat sich als vorteilhaft erwiesen, wenn die Energieschwelle derart ausgelegt ist, dass noch etwa 200 bis 500 Übermittlungen ausgelöst werden können. Innerhalb dieses Zeitraumes kann der Benutzer für einen Austausch und/oder ein Wiederaufladen des Energiespeichers sorgen.

Eine weitere vorteilhafte Ausgestaltung des erfindungsgemäßen Verfahrens sieht vor, dass im passiven Funktionszustand die Überwachungseinheit die Elektronikeinheit mittelbar oder unmittelbar von dem Display und dem Energiespeicher trennt. Um die Elektronikeinheit weiterhin zu betreiben wird ein zweiter Energiespeicher genutzt. Jener ist unabhängig von dem Energiespeicher und dient ausschließlich zur Versorgung der Elektronikeinheit. Der eigentliche Energiespeicher ist weiterhin mit dem Display verbunden und kann noch für einige Anzeigen genutzt werden. Durch die Aufteilung der Versorgung in jene für das Display durch den Energiespeicher und jene für die Elektronikeinheit durch den zweiten Energiespeicher ist sichergestellt, dass das Display die integrale Energiemenge des mobilen ldentifikationsgebers nicht derart herabsenken kann, dass keine Datenkommunikation mit dem fahrzeugseitigen Teil mehr möglich ist. Da der Energieverbrauch der Elektronikeinheit im Vergleich zum Display geringer ist, kann bis zum Unterschreiten der Energieschwelle die Elektronikeinheit von dem Energiespeicher versorgt werden. Erst nach Unterschreiten der Energieschwelle wird die Elektronikeinheit von dem Energiespeicher abgetrennt und mittelbar bzw. unmittelbar mit dem zweiten Energiespeicher verbunden. Der zweite Energiespeicher kann derart ausgelegt sein, dass seine maximale Energiemenge deutlich geringer ist als jene des Energiespeichers, da der zweite Energiespeicher ausschließlich zur Versorgung der Elektronikeinheit genutzt wird.

Die erfindungsgemäße Aufgabe wird ebenfalls gelöst durch einen mobilen Identifikationsgeber für ein Sicherheitssystem eines Fahrzeuges, gemäß Anspruch 9. Alle Merkmale und Details, die für das erfindungsgemäße Verfahren beschrieben sind, gelten selbstverständlich auch im Zusammenhang mit dem erfindungsgemäßen Identifikationsgeber und jeweils umgekehrt. Der mobile Identifikationsgeber ist vorrangig dafür ausgelegt, dass erfindungsgemäße Verfahren auszuführen.

In einer vorteilhaften Ausgestaltung weist der mobile Identifikationsgeber einen zweiten Energiespeicher auf. Der zweite Energiespeicher dient dazu, nach Überführung des Displays in den passiven Funktionszustand die Elektronikeinheit weiter mit Energie zu versorgen. Als vorteilhaft hat es sich herausgestellt, wenn der Energiespeicher und/oder der zweite Energiespeicher wenigstens eines der folgenden Elemente ist: ein Akkumulator, eine Batterie, insbesondere eine wiederaufladbare Batterie, eine galvanische Zelle, eine Redox-Flow-Zelle, eine Brennstoffzelle, ein Kondensator, insbesondere ein Doppelschicht-Kondensator (wie z.B. Goldcap, Supercap, BoostCap oder Ultracap). Jeder der genannten Energiespeicher weist eine Energiemenge auf, die es ermöglicht, ein Display auch über einen längeren Zeitraum hinweg zu betreiben. Gleichzeitig sind dabei die Anforderungen an den benötigten Bauraum sehr gering.

Je nach Anforderung an die Überwachungseinheit und/oder die Elektronikeinheit hat es sich als vorteilhaft erwiesen, wenn wenigstens eine von beiden eines der folgenden Teile aufweist: einen integrierten Schaltkreis (IC), EPROM (Erasable Programmable Read-Only-Memory), Mikrocontroller, FPGA (Field Programmable Gate Array), DSP (Digitaler Signalprozessor), PAL (Programmable Array Logic), ASIC (application specific integrated circuit), ASSP (Application Specific Standard Products). Jedes der aufgezählten Teile dient zur Verarbeitung von Daten und Informationen. In Abhängigkeit von der benötigten Geschwindigkeit und der maximal zur Verfügung stehenden Energiemenge sowie Baugröße können jeweils unterschiedliche der aufgeführten Schaltkreise Verwendung finden. Zusätzlich sind einige der aufgelisteten Schaltkreise programmierbar und weisen die Möglichkeit auf, im laufenden Betrieb Teile des benutzten Computerprogrammes auszutauschen. So können auch nach Vertrieb des mobilen Identifikationsgebers durch eine Werkstatt entsprechende Änderungen in dem Programmablauf nachträglich in die Elektronikeinheit bzw.

Überwachungseinheit eingespielt werden. Zum Aufbau der Datenkommunikation hat es sich als vorteilhaft erwiesen, wenn der mobile Identifikationsgeber ein Kommunikationselement aufweist. Dieses Kommunikationselement kann insbesondere eine Sende-/Empfangseinheit sein, welche über elektromagnetische Wellen mit einem entsprechend ausgestalteten Kommunikationsmittel des Fahrzeuges in Verbindung steht. Vorteilhafterweise verwendet das Kommunikationselement wenigstens eine der folgenden Technologien: Bluetooth, Infrared Data Association (IrDA), ZigBee, Bluejacking, Bluesnarfing, Bluebugging, Near Field Communication (NFC), Wireless Local Area Network (WLAN; IEEE 802.11), WiMAX, Wibree, FireWire (IEEE 1394), USB (Universal Serial Bus), Wireless USB, HDMI (High Definition Multimedia Interface), Unilink, ATA/ATAPI (Advanced Technology Attachment with Packet Interface), IEEE 488, IEEE 1284, induktive Datenübertragung, kapazitive Datenübertragung oder Ultraschall. Je nach Einssatzzweck und Einsatzort hat es sich als vorteilhaft erwiesen, wenn eine der genannten Technologien Verwendung finden. Die Auswahl ist dabei insbesondere abhängig von der zu übertragenen Datenmenge und dem Abstand, welcher zwischen dem mobilen Identifikationsgeber und dem fahrzeugseitigen Teil überbrückt werden muss.

In einer vorteilhaften Ausführungsvariante verwendet das Display mindestens eines der folgenden Mittel: eine Leuchtdiode (LED), eine Organische Leuchtdiode (OLED), eine Flüssigkristallanzeige (LCD), einen Plasmabildschirm, eine Kathodenstrahlröhre, ein Surface-Conduction Electron-Emitter Display (SED) oder einen Feldemissionsbildschirm (FED). Jedes der genannten Darstellungsmittel können im Rahmen eines Displays Verwendung finden. Abhängig von den Bedingungen und Umwelteinflüssen, denen das Display ausgesetzt ist, hat es sich als vorteilhaft erwiesen unterschiedliche Darstellungsmittel zu verwenden. So sind beispielhaft Plasmabildschirme dafür bekannt, besonders brillante und hochauflösende Darstellungen zu ermöglichen. Im Gegensatz dazu benötigen LEDs und OLEDs nur geringe elektrische Leistungen und sind außerdem gegenüber äußeren Einflüssen weitgehend unempfindlich. SED-Bildschirme weisen bei einem geringen Stromverbrauch einen sehr hohen Wirkungsgrad verbunden mit einem hohen Kontrast auf. Außerdem ist die Reaktionszeit von SED-Bildschirmen unter einer Millisekunde und somit im Bereich klassischer Röhrenmonitore. Zusätzlich hat es sich herausgestellt, dass solche Bildschirme auch unter großen Blickwinkeln eindeutig zu erkennen sind.

Weitere Maßnahmen und Vorteile der Erfindung ergeben sich aus den Ansprüchen, der nachfolgenden Beschreibung und den Zeichnungen. In den Zeichnungen ist die Erfindung in mehreren Ausführungsbeispielen dargestellt. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Übersicht einer Datenkommunikation zwischen einem mobilen Identifikationsgeber und einem Fahrzeug,
- Figur 2: der erfindungsgemäße mobile Identifikationsgeber,
- Figur 3: ein Flussdiagramm zur Verdeutlichung des erfindungsgemäßen Verfahrens,
- Figur 4: eine Diagramm zur Verdeutlichung der Abnahme einer Energiemenge in Abhängigkeit von der Zeit und
- Figur 5: eine weitere Ausführungsvariante des erfindungsgemäßen mobilen Identifikationsgebers.

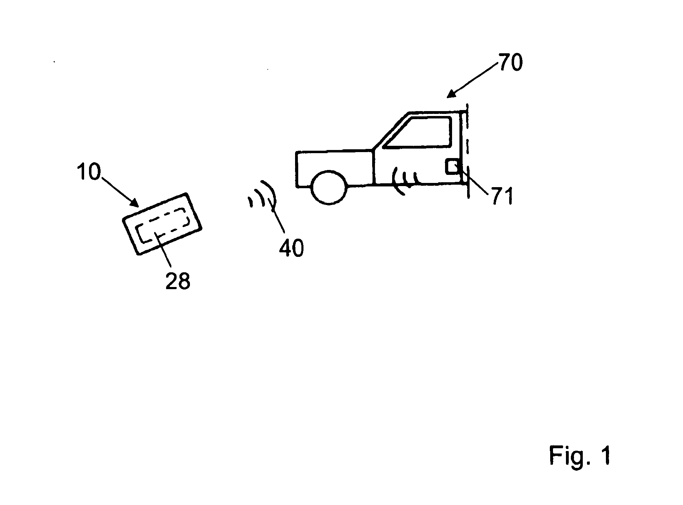

In Figur 1 ist schematisch ein mobiler Identifikationsgeber 10 dargestellt, der mit einem Sicherheitssystem 71 eines Fahrzeuges 70 in Kommunikation steht. Der mobile Identifikationsgeber 10 dient dazu, vordefinierte Funktionen an dem Fahrzeug 70 auszuführen. Dabei handelt es sich insbesondere um ein Ver- und/oder Entriegeln des Schließsystems des Fahrzeuges 70. Zu diesem Zweck übermittelt der mobile Identifikationsgeber 10 einen Code an das Sicherheitssystem 71. Diese Übermittlung kann über eine drahtlose Datenkommunikation 40 geschehen. Um die Datenkommunikation 40 aufzubauen, weist der mobile Identifikationsgeber 10 eine Elektronikeinheit 28 auf. Die Elektronikeinheit 28 besitzt eine Sende-/Empfangseinheit, welche für den Aufbau der Datenkommunikation 40 genutzt wird. Darüber hinaus steuert die Elektronikeinheit 28 die Funktionen des mobilen Identifikationsgebers 10.

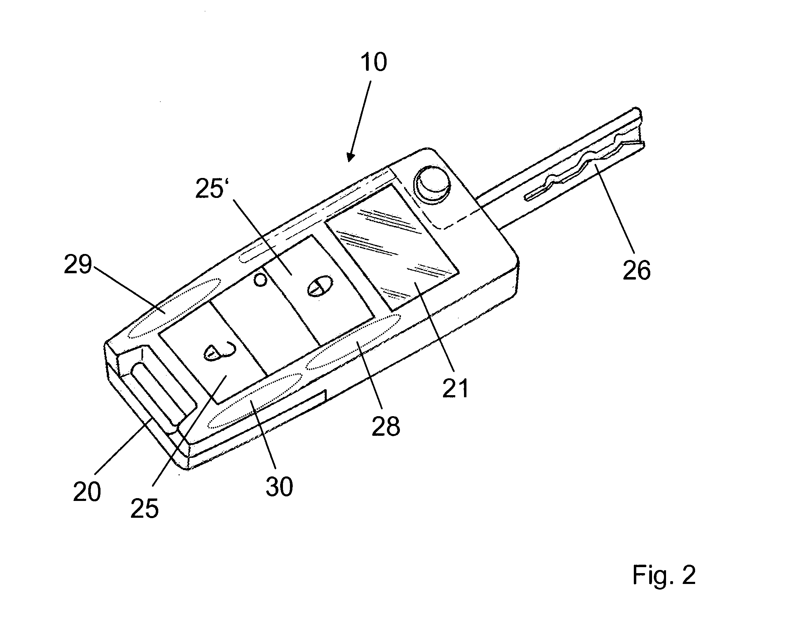

In Figur 2 ist eine schematische Darstellung einer möglichen Ausführungsvariante des erfindungsgemäßen mobilen Identifikationsgebers 10 dargestellt. Der Identifikationsgeber 10 weist ein etwa rechteckartiges Gehäuse 20 auf, in dem die Elektronikeinheit 28 integriert ist. Ein Energiespeicher 29 versorgt die Elektronikeinheit 28 mit Energie. Vorzugsweise handelt es sich bei dem Energiespeicher 29 um eine Batterie oder einen Kondensator, welcher elektrische Energie für die Versorgung der Bauteile der Elektronikeinheit 28 zur Verfügung stellt. Auf einer Seite des Gehäuses 20 des mobilen Identifikationsgebers 10 sind eine Mehrzahl von Betätigungselementen 25,25' angeordnet. An den Betätigungselementen 25,25' lassen sich unterschiedliche Funktionen an dem Fahrzeug 70 auslösen. So erfolgt durch eine Betätigung des Betätigungselementes 25 ein Entriegeln des fahrzeugseitigen Schließsystems. Das Betätigungselement 25 ist dafür als ein Schalter ausgestaltet, welcher nach seiner Betätigung die Elektronikeinheit 28 veranlasst ein Schaltsignal zu generiert. Dieses Schaltsignal wird von der Elektronikeinheit 28 über die Datenkommunikation 40 an das Sicherheitssystem 71 des Fahrzeuges 70 übermittelt. Dort findet eine entsprechende Umsetzung des Schaltsignals statt. Als Resultat ist es einem Benutzer möglich, einen beweglichen Teil, wie etwa eine Tür, zu öffnen. Möchte der Benutzer das Fahrzeug 70 wieder Verriegeln, kann er sich des Betätigungselementes 25' bedienen. Durch eine Aktivierung des Betätigungselementes 25' wird in der Elektronikeinheit 28 ein Schaltsignal generiert, welches das Sicherheitssystem 71 veranlasst, die Türen des Fahrzeuges 70 zu verriegeln. Entsprechende auf den Betätigungselementen 25,25' angeordnete Piktogramme sollen einem potentiellen Benutzer die jeweiligen Funktionen verdeutlichen. Um die Benutzerfreundlichkeit des mobilen Identifikationsgebers 10 weiter zu steigern, weist dieser ein Display 21 auf. Auf dem Display 21 kann ein Status des mobilen Identifikationsgebers 10 angezeigt werden. Unter dem Begriff Status sind dabei sämtliche Einstellungen und/oder übermittelbare Daten der Elektronikeinheit 28 zu verstehen. Weiterhin können auf dem Display 21 auch jene Informationen angezeigt werden, welche das Sicherheitssystem 71 des Kraftfahrzeuges 70 im Rahmen der vorzugsweise bidirektionalen Datenkommunikation 40 an den mobilen Identifikationsgeber 10 übermittelt. Zusätzlich ermöglicht das Display 21 auch eine einfache und intuitive Bedienung des mobilen Identifikationsgebers 10 bei eingeschränkten Lichtverhältnissen. Dazu weist das Display 21 eine Hintergrundbeleuchtung auf, die es ermöglicht auch in Dunkelheit und bei eingeschränkten Lichtverhältnissen eindeutig die Information von dem Display abzulesen.

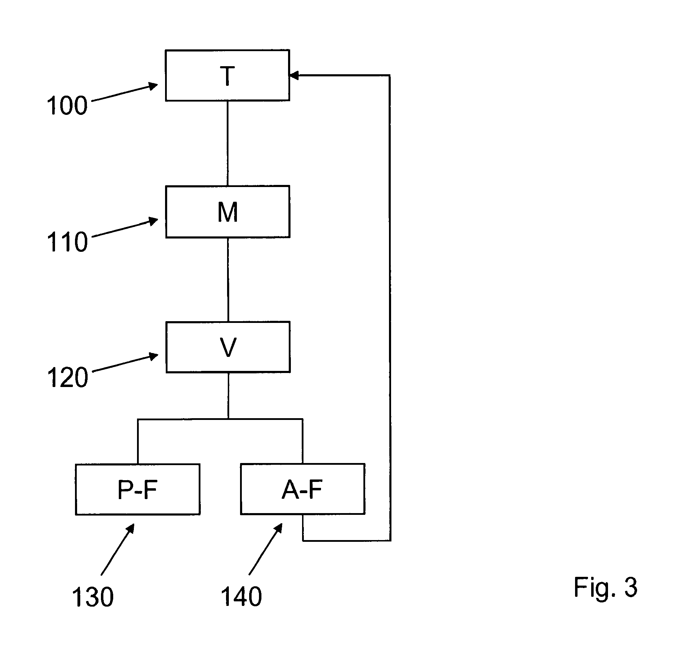

Ausgangspunkt für das erfindungsgemäße Verfahren ist zum einen die Tatsache, dass das Display 21 im Allgemeinen einen höheren Energieverbrauch als die Elektronikeinheit 28 aufweist. Zum anderen soll die Funktionsfähigkeit des mobilen Identifikationsgebers 10 - also das Übertragen einer Anweisung mittels der Datenkommunikation 40 - möglichst lange aufrechterhalten werden. Um diese Kriterien zu erfüllen, sieht das erfindungsgemäße Verfahren vor, dass eine Energiemenge des Energiespeichers von einer Überwachungseinheit 30 überwacht und mit einer Energieschwelle verglichen wird. In Abhängigkeit davon, ob die Energiemenge ober- oder unterhalb der Energieschwelle liegt, wird ein Funktionszustand des Displays gesteuert. Das erfindungsgemäße Verfahren soll anhand des Flussdiagramms in Figur 3 näher erläutert werden. Im Rahmen einer Messung 110 bestimmt die Überwachungseinheit 30 eine Energiemenge innerhalb des Energiespeichers 29. Vorzugsweise handelt es sich bei der Bestimmung der Energiemenge um eine Messung der in einer Batterie verbleibenden Spannung. Im Anschluss daran vergleicht 120 die Überwachungseinheit 30 die gemessene Energiemenge mit der Energieschwelle. Wird bei der Messung ermittelt, dass die in dem Energiespeicher 29 vorhandene Energiemenge geringer ist als die vordefinierte Energieschwelle, wechselt der Funktionszustand des Displays 21 in einen passiven Funktionszustand 130. Im Rahmen dieses passiven Funktionszustandes 130 wird das Display 21 in einen energieversorgungsfreien Zustand gesetzt. Der energieversorgungsfreie Zustand kann insbesondere dadurch erreicht werden, dass das Display mittelbar oder unmittelbar von dem Energiespeicher getrennt wird. Misst die Überwachungseinheit 30 andererseits, dass die Energiemenge noch oberhalb der Energieschwelle liegt verbleibt das Display 21 in den aktiven Funktionszustand 140. Im Rahmen des aktiven Funktionszustandes 140 zeigt das Display 21 den Status des mobilen ldentifikationsgebers 10 an. Folglich ist es einem Benutzer einfach und eingängig möglich, sich über den Status des mobilen Identifikationsgebers 10 und/oder des Fahrzeuges 70 zu informieren. Ein Zeitmesser 100 misst eine Zeitspanne welche bis zu einer weiteren Messung 110 der Energiemenge verstreichen soll. So ist eine permanente Überwachung der Energiemenge in dem Energiespeicher sichergestellt. Damit ergibt sich ein Identifikationsgeber 10 der Energie-autarke Systeme zur Bereitstellung eines Funksignals verwendet.

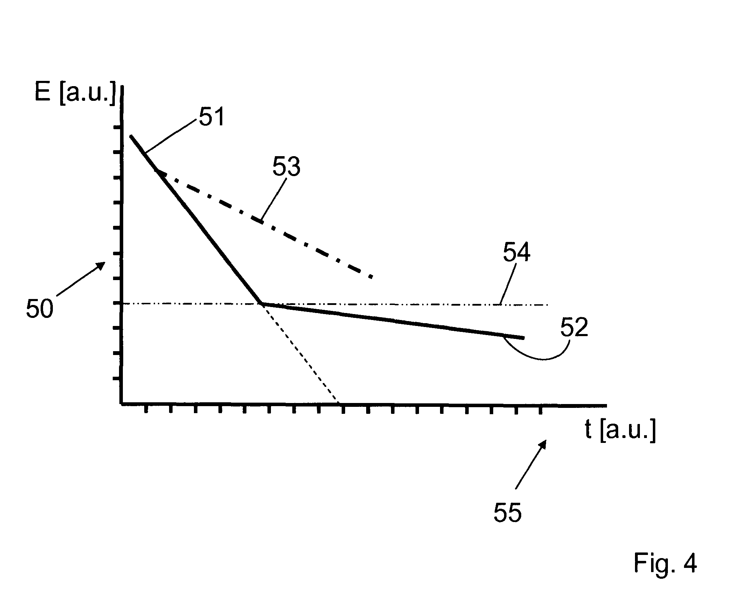

In Figur 4 ist ein Diagramm dargestellt, welches beispielhaft eine in dem Energiespeicher 29 gespeicherte Energiemenge 50 als Funktion einer Zeit 55 darstellt. Im Rahmen des aktiven Funktionszustandes 140 verbraucht vorrangig das Display 21 einen Teil der Energiemenge 50. Folglich nimmt die Energiemenge 50 im Rahmen der Zeit 55 ab, was auch die Gerade 51 verdeutlichen soll, welche den Energieverbrauch im aktiven Funktionszustand darstellt. Unterschreitet die Energiemenge 50 eine vordefinierte Energieschwelle 54 wechselt der Funktionszustand des Displays 21 in den passiven Funktionszustand 130. Da nunmehr das Display 21 in einem energieversorgungsfreien Zustand gehalten wird, verbraucht nur noch die Elektronikeinheit 28 Teile der Energiemenge 50 des Energiespeichers 29. Aus diesem Grund fällt die Energiemenge 50 über die Zeit wesentlich langsamer ab, was auch der Energieverbrauch 52 im passiven Zustand verdeutlicht. Durch das erfindungsgemäße Verfahren ist es möglich, dass nach Unterschreiten der Energieschwelle 54 die Energiemenge 50 derart groß ist, dass die Elektronikeinheit 28 weiterhin in Datenkommunikation 40 mit dem Kraftfahrzeug 70 steht. Es wird folglich verhindert, dass das Display 21 den Energiespeicher 29 vollständig leert. Denn in diesem Falle könnte der mobile Identifikationsgeber 10 nicht mehr in Datenkommunikation 40 mit dem Kraftfahrzeug 70 treten und der Nutzer des mobilen Identifikationsgebers wäre gezwungen einen mechanischen Notschlüssel 26 zum Ver- bzw. Entriegeln des Sicherheitssystems 71 des Fahrzeuges 70 zu nutzen. Um jenes zu verhindern, ermöglicht das erfindungsgemäße Verfahren die Überführung des Displays aus dem aktiven Funktionszustand 140 in den passiven Funktionszustand 130 vor Erreichen der völligen Entleerung des Energiespeichers 29. Durch den Vergleich der Energiemenge 50 mit der Energieschwelle 54 wird sichergestellt, dass auch nach Verbrauch eines großen Teiles der Energiemenge 50 des Energiespeichers 29 der mobile Identifikationsgeber 10 weiterhin seine Funktion als Kommunikationsmittel mit dem Sicherheitssystem 71 des Fahrzeuges 70 erfüllen kann.

Zusätzlich kann das Display 21 einen schlafenden Funktionszustand aufweisen. Im Rahmen des schlafenden Funktionszustandes verbraucht das Display 21 nur einen Bruchteil der Energie im Vergleich zum aktiven Funktionszustand 140. Dieses verdeutlicht auch der Energieverbrauch 53 im schlafenden Funktionszustand. Im Rahmen des schlafenden Funktionszustandes zeigt das Display 21 keinerlei Statusinformationen an. Allerdings bedarf es nur der Berührung eines der Betätigungselemente 25,25' um das Display 21 aus dem schlafenden Funktionszustand zu wecken und in den aktiven Funktionszustand 140 zu überführen. Der schlafende Funktionszustand kann einerseits durch eine zweite Energieschwelle ausgelöst werden, die von der Überwachungseinheit 30 überwacht wird. Unterschreitet die Energiemenge 50 des Energiespeichers 29 diese zweite Energieschwelle wird das Display 21 automatisch und reversibel in den schlafenden Funktionszustand überführt. Alternativ oder in Kombination kann das Display 21 auch nach Ablauf einer Zeitspanne in den schlafenden Funktionszustand versetzt werden. So ist sichergestellt, dass das Display 21 nicht in dem aktiven Funktionszustand 140 verbleibt, obwohl es von einem Benutzer nicht genutzt wird. So misst ein Zeitmesser 100 die Zeitspanne seit der letzten Betätigung der Betätigungselemente 25,25'. Ist die verstrichene Zeit größer als eine vordefinierte Zeitspanne wird das Display 21 automatisch und reversibel in den schlafenden Funktionszustand versetzt.

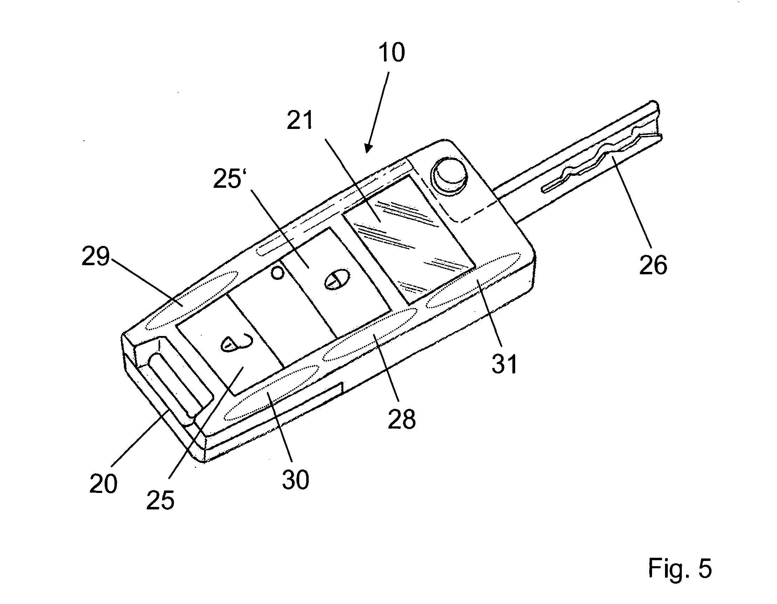

Eine weitere Ausführungsvariante des erfindungsgemäßen mobilen Identifikationsgebers 10 ist in Figur 5 dargestellt. Dieser mobile Identifikationsgeber 10 weist einen zweiten Energiespeicher 31 auf. Unterschreitet die Energiemenge 50 des Energiespeichers 59 die vordefinierte Energieschwelle 54 so wird das Display 21 in den passiven Funktionszustand 130 überführt. Die Versorgung der Elektronikeinheit 28 wird in diesem Falle nicht mehr durch den Energiespeicher 29 sondern durch den zweiten Energiespeicher 31 sichergestellt. Dazu werden sowohl Energiespeicher 29 als auch Display 21 mittelbar oder unmittelbar von der Elektronikeinheit 28 getrennt. Somit ist ausschließlich der zweite Energiespeicher 31 für die Versorgung der Elektronikeinheit 29 zuständig. Diese Ausführungseinheit stellt sicher, dass auf jeden Fall der Elektronikeinheit 28 eine ausreichende Energiemenge 50 aus dem zweiten Energiespeicher 31 zur Verfügung steht. So kann die Elektronikeinheit 28 weiterhin die Datenkommunikation 40 mit dem fahrzeugseitigen Teil, insbesondere dem Sicherheitssystem 71 betreiben.

### Bezugszeichenliste

- 10: mobile Identifikationsgeber
- 20: Gehäuse
- 21: Display
- 25,25': Betätigungselement
- 26: mechanischer Schlüssel
- 28: Elektronikeinheit
- 29: Energiespeicher
- 30: Überwachungseinheit
- 31: zweiter Energiespeicher
- 40: Datenkommunikation
- 50: Energiegehalt
- 51: Energieverbrauch im aktiven Funktionszustand
- 52: Energieverbrauch im passiven Funktionszustand
- 53: Energieverbrauch im schlafenden Funktionszustand
- 54: Energieschwelle
- 55: Zeit
- 70: Fahrzeug
- 71: Sicherheitssystem
- 100: Zeitmesser
- 110: Messung
- 120: Vergleich
- 130: passiver Funktionszustand
- 140: aktiver Funktionszustand

## Patentansprüche

1. Verfahren zur Steuerung eines mobilen Identifikationsgebers (10) für ein Sicherheitssystem (71) eines Fahrzeuges (70), wobei
der mobile Identifikationsgeber (10) eine Elektronikelnhelt (28) aufweist, und mittels der Elektronikeinheit (28) eine Datenkommunikation (40) mit einem fahrzeugseitigen Teil, insbesondere dem Sicherheitssystem (71), aufgebaut wird, wobei in der Elektronlkeinheit (28) ein entsprechendes Codesignal generiert wird, welches über die Datenkommunikation (40) an den fahrzeugseitigen Tell übermlttelt wird,
die Elektronikeinhelt (28) mittels eines Energiespeichers (29) mit Energie versorgt wird,
ein Energiemenge (50) des Energiespeichers (29) von einer Überwachungseinheit (30) überwacht wird, wobei
der mobile Identifikationsgeber (10) ein Display (21) aufweist,
**dadurch gekennzeichnet, dass**
die Energiemenge (50) des Energiespeichers (29) von der Überwachungseinheit (30) mit wenigstens einer Energieschwelle (54) verglichen wird, und
ein Funktionszustand (130,140) des Displays (21) in Abhängigkeit von einem Verhältnis der Energiemenge (50) zu der Energieschwelle (54) gesteuert wird,
wobei aufgrund der von der Überwachungseinheit (30) überwachten Energieschwelle (54) der Energiespeicher (29) eine Energiemenge (50) aufweist, welche groß genug ist,
um eine mehrfache Übermittlung des Codesignales über die Datenkommunikation (40) sicherzustellen.

2. Verfahren nach einem der vorhergehenden Ansprüche,
**dadurch gekennzeichnet, dass**
von dem Display (21) einer der folgenden Funktionszustände eingenommen wird: ein aktiver Funktionszustand (140) oder ein passiver Funktionszustand (130), wobei insbesondere in dem aktiven Funktionszustand (140) mittels des Displays (21) ein Status des mobilen Identifikationsgebers (10) angezeigt wird und in dem passiven Funktionszustand (130) das Display (21) In einem energieversorgungsfreiem Zustand ist.

3. Verfahren nach Anspruch 2,
**dadurch gekennzeichnet, dass**
mittels der Überwachungseinheit (30) in Abhängigkeit von der Energiemenge und/oder der Energieschwelle (54) des Energiespeichers (29) ein reversibler Wechsel zwischen dem aktiven Funktionszustand (140) und dem passiven Funktionszustand (130) gesteuert wird.

4. Verfahren nach einem der Ansprüche 2 oder 3,
**dadurch gekennzeichnet, dass**
im passiven Funktionszustand (130) die Überwachungseinheit (30) das Display (21) mittelbar oder unmittelbar von dem Energiespeicher (29) trennt.

5. Verfahren nach einem der vorhergehenden Ansprüche,
**dadurch gekennzeichnet, dass**
in einem schlafenden Funktionszustand vom Display (21) nur ein Bruchteil der Energie verbraucht wird, insbesondere dass mittels der Überwachungseinheit (30) in Abhängigkeit von einer zweiten Energieschwelle des Energiespeichers (29) ein reversibler Wechsel zwischen dem aktiven Funktionszustand (140) und dem schlafenden Funktionszustand gesteuert wird, insbesondere dass das Display (21) nach Ablauf einer Zeitspanne in den schlafenden Funktionszustand versetzt wird.

6. Verfahren nach einem der vorhergehenden Ansprüche,
**dadurch gekennzeichnet, dass**
bei einer Aktivierung eines Betätigungselementes (25) von der Elektronikeinheit (28) die Datenkommunikation (40) aufgebaut wird.

7. Verfahren nach einem der Ansprüche 2 bis 6,
**dadurch gekennzeichnet, dass**
die Energieschwelle (54) derart gewählt ist, dass auch im passiven Funktionszustand (130) die Elektronikeinheit (28) die Datenkommunikation (40) in Abhängigkeit von der Aktivierung des Betätigungselementes aufbaut.

8. Verfahren nach einem der Ansprüchen 2 bis 6,
**dadurch gekennzeichnet, dass**
im passiven Funktionszustand (130) die Überwachungseinheit (30) die Elektronikelnheit (28) mittelbar oder unmittelbar von dem Display (21) und dem Energiespeicher (29) trennt, wobei insbesondere Im passiven Funktionszustand (130) die Elektronikeinheit (28) von einem zweiten Energiespeicher mit elektrischer Energie versorgt wird,

9. Mobiler Identifikationsgeber (10) für ein Sicherheitssystem (71) eines Fahrzeuges (70),
mit einer Elektronikeinheit (28) zur Datenkommunikation (40) mit einem fahrzeugseitigen Teil, insbesondere dem Sicherheitssystem, wobei in der Elektronikeinheit (28) ein entsprechendes Codesignal generiert wird, welches Ober die Datenkommunikation (40) an den fahrzeugseitigen Teil übermittelt wird,
wobei ein Energiespeicher (29) zur Versorgung der Elektronikeinheit (28) mit Energie dient,
eine Überwachungseinheit (30) einen Energiemenge (50) des Energiespeichers (29) überwacht, wobei
der mobile Identifikatlonsgeber (10) ein Display (21) aufweist, und
**dadurch gekennzeichnet,**
**dass** die Energiemenge (50) des Energiespeichers (29) von der Überwachungseinheit (30) mit
wenigstens einer Energieschwelle (54) vergleichbar ist, und
ein Funktionszustand (130,140) des Displays (21) in Abhängigkeit von einem Verhältnis der Energiemenge (50) zu der Energieschwelle (54) steuerbar ist,
wobei aufgrund der von der Überwachungseinheit (30) überwachten Energieschwelle (54) der Energiespeicher (29) eine Energiemenge (50) aufweist, welche groß genug ist, um eine mehrfache Übermittlung des Codesignales über die Datenkommunikation (40) sicherzustellen.

10. Mobiler Identifikationsgeber (10) nach Anspruch 9,
**dadurch gekennzeichnet, dass**
der mobile Identikationsgeber (10) einen zweiten Energiespeicher aufweist.

11. Mobiler Identifikationsgeber (10) nach einem der Ansprüche 9 oder 10,
**dadurch gekennzeichnet, dass**
der Energiespeicher (29) und/oder der zweite Energiespeicher wenigstens eines der folgenden Elemente Ist: ein Akkumulator, eine Batterie, insbesondere eine wiederaufladbare Batterie, eine galvanische Zelle, eine Redox-Flow-Zelle, eine Brennstoffzelle, ein Kondensator, insbesondere ein Doppelschicht-Kondensator.

12. Mobiler Identifikationsgeber (10) nach einem der Ansprüche 9 bis 11,
**dadurch gekennzeichnet, dass**
die Überwachungseinhelt (30) und/oder die Elektronikeinheit (28) wenigstens eines der folgenden Teile aufweist: integrierter Schaltkreis (IC), EPROM (Erasable Programmable Read-Only-Memory), Mikrocontroller, FPGA (Field Programmable Gate Array), DSP (Digitaler Signalprozessor), PAL (Programmable Array Logic), ASIC (application specific integrated circuit), ASSP (Application Specific Standard Produots).

13. Mobiler Identifikationsgeber (10) nach einem der Ansprüche 9 bis 12,
**dadurch gekennzeichnet, dass**
der mobiler ldentifikationsgeber (10) ein Kommunikationselement aufweist und das Kommunikationselement wenigstens eine der folgenden Technologien verwenden: Bluetooth, Infrared Data Associatlon (IrDA), ZigBee, Bluejacking, Blueanarfing, Bluebugging, Near Field Communication (NFC), Wireless Local Area Network (WLAN; IEEE 802.11), WiMAX, Wibree, FireWire (IEEE 1394), USB (Universal Serial Bus), Wireless USB, HDMI (High Definition Multimedia Interface), Unilink, ATA/ATAPI (Advanced Technology Attachment wlth Packet Interface), IEEE 488, IEEE 1284, induktive Datenübertragung, kapazitive Datenübertragung oder Ultraschall.

14. Mobiler Identifikationsgeber (10) nach einem der Ansprüche 9 bis 13,
**dadurch gekennzeichnet, dass**
dass das Display (21) mindestens eines der folgenden Mittel verwendet: eine Leuchtdiode (LEDs), eine Organische Leuchtdiode (OLEDs), eine Flüssigkristallanzeige (LCDs), einen Plasmabildschirm, eine Kathodenstrahlröhre, ein Surface-Conduction Electron-Emitter Display (21) (SED) oder einen Feldemissionsbildschirm (FED).

15. Mobiler Identifikationsgeber (10) nach einem der Ansprüche 9 bis 14,
**dadurch gekennzeichnet, dass**
der mobiler Identifikationsgeber (10) wenigstens ein Betätigungselement (25) aufweist, insbesondere dass das Betätigungselement (25) zur Eingabe einer Information dient, wobei die Information auf dem Display (21) anzeigbar ist.

## Claims

1. Method for controlling an identification device (10) for a security system (71) of a vehicle (70), wherein
the mobile identification device (10) comprises an electricity unit (28) and using the electricity unit (28) the data communication (40) is established with the vehicle related part, particularly with the security system (71), wherein in the electricity unit (28) a corresponding code is generated, which is transmitted via a data communication (40) to the vehicle related part,
the electricity unit (28) is supplied with energy via an energy storage (29),
an energy content (50) of the energy storage (29) is controlled by the control unit (30), the mobile identification device (10) comprises a display (21),
wherein
the energy content (50) of the energy storage (29) is compared with at least one energy barrier (54) via the control unit (30) and
a functional state (130, 140) of the display (21) is regulated according to the proportion of the energy content (50) to the energy barrier (54),
wherein the energy storage (29) comprises an energy content (50) based on the energy barrier (54) controlled by the control unit (30) which is big enough to ensure several transmissions of the code via the data communication (40).

2. Method according to one of the preceding claims,
**charcterized in that,**
the display (21) adopts one of the following functional states: an active functional state (140) or a passive functional state (130), wherein a state of the mobile identification device (10) is displayed via the display (21) particularly in the active functional state (140) and in the passive functional state (130) the display (21) is in a state free of power supply.

3. Method according to claim 2,
**characterized In that**
a reversible change between the active functional state (140) and the passive functional state (130) is regulated using the control unit (30) according to the amount of energy and/or the energy barrier (54) of the energy storage (29).

4. Method according to one of the claims 2 or 3,
**characterized in that**
in the passive functional state (130) the control unit (30) separates the display (21) indirectly or directly from the energy storage (29).

5. Method according to one of the preceding claims,
**characterized in that**
in a silent functional state of the display (21) only a fractional amount of the energy is used, particularly that a reversible change between the active functional state (140) and the silent functional state is controlled using the control unit (30) according to a second energy barrier of the energy storage (29), particularly that the display (21) is transferred Into a silent functional state after a certain time has elapsed.

6. Method according to one of the preceding claims,
**characterized in that**
due to an activation of the actuation unit (25) the data communication (40) is established by the electricity unit (28).

7. Method according to one of the claims 2 to 6,
**characterized in that**
the energy barrier (54) is selected In such-a manner, that even in the passive functional state (130) the electricity unit (28) establishes the data communication (40) according to the activation of the actuation unit.

8. Method according to one of the claims 2 to 6,
**characterized in that**
in the passive functional state (130) the control unit (30) separates the electricity unit (28) indirectly or directly from the display (21) and the energy storage (29), wherein particularly in the passive functional state (130) the electricity unit (28) is supplied with electric energy by a second energy storage.

9. Mobile identification device (10) for a security system (71) of a vehicle (70),
with an electricity unit (28) for data communication (40) with the vehicle related part, particularly the security system, wherein the electricity unit (28) generates a corresponding code, which is transmitted to the vehicle related part via the data communication (40),
wherein an energy storage (29) serves to supply the electricity unit (28) with energy,
a control unit (30) controls the energy content (50) of the energy storage (29), wherein
the mobile identification device (10) comprises a display (21)
**characterized in that,**
that the energy content (50) of the energy storage (29) Is comparable to at least one energy barrier (54) via the control unit (30), and
a functional state (130, 140) of the display (21) Is controllable in accordance of the proportion of the energy content (50) to the energy barrier (54),
wherein the energy storage (29) comprises an energy content (50) based on the energy barrier (54) controlled by the control unit (30), which is big enough to ensure several transmissions of the code via the data communication (40).

10. Mobile identification device (10) according to claim 9,
**characterized In that**
the mobile identification device (10) comprises a second energy storage.

11. Mobile identification device (10) according to one of the claims 9 or 10,
**characterized In that**
the energy storage (29) and/or the second energy storage is at least one of the following elements: an accumulator, a battery, particularly a rechargeable battery, a galvanic cell, a Redox-Flow-cell, a fuel cell, a capacitor, particularly a double coating capacitor.

12. Mobile identification device (10) according to one of the claims 9 to 11,
**characterized In that**
the control unit (30) and/or the electricity unit (28) comprise at least one of the following parts: integrated circuit (IC), EPROM (Erasable Programmable Read-Only-Memory), micro controller, FPGA (Field Programmable Gate Array), DSP (digital signal processor), PAL (Programmable Array Logic), ASIC (application specific integrated circuit), ASSP (Application Specific Standard Products).

13. Mobile identification device (10) according to one of the claims 9 to 12,
**characterized In that**
the mobile identification device (10) comprises a communication element and that the communication element comprises at least one of the following technologies: Bluetooth, Infrared Data Association (IrDA), ZigBee, Bluejacking, Bluesnarfing, Bluebugging, Near Field Communication (NFC), Wireless Local Area Network (WLAN; IEEE 802,11), WiMAX, Wibree, FireWire (IEEE 1394), USB (Universal Serial Bus), Wireless USB, HDMI (High Definition Multimedia Interface), Unilink, ATA/ATAPI (Advanced Technology Attachment with Packet Interface), IEEE 488, IEEE 1284, inductive data communication, capacitate data communication or ultrasonic sound.

14. Mobile identification device (10) according to one of the claims 9 to 13,
**characterized In that**
the display (21) comprises at least one of the following means: an illumination diode (LED), an organic illumination diode (OLED), an liquid crystal display (LCD), a plasma display, a cathode ray indicator, a surface-conduction electronic-emitter display (21) (SED) or a field emission display (FED).

15. Mobile identification device (10) according to one of the claims 9 to 14,
**characterized in that**
the mobile Identification device (10) comprises at least one actuation unit (25) particularly that the actuation unit (25) serves as the input of an information, wherein the information can be shown on the display (21).

## Revendications

1. Procédé de commande d'un capteur d'identification mobile (10) pour un système de sécurité (71) d'un véhicule (70), dans lequel
le capteur d'identification mobile (10) présente une unité électronique (28) et une communication de données (40) est établie avec une partie côté véhicule, en particulier le système de sécurité (71), au moyen de l'unité électronique (28), un signal codé correspondant étant généré dans l'unité électronique (28), lequel est transmis à la partie côté véhicule via la communication de données (40),
l'unité électronique (28) est alimentée en énergie au moyen d'un accumulateur d'énergie (29),
une quantité d'énergie (50) de l'accumulateur d'énergie (29) est surveillée par une unité de surveillance (30),
le capteur d'identification mobile (10) présente un affichage (21),
**caractérisé en ce**
**que** la quantité d'énergie (50) de l'accumulateur d'énergie (29) est comparée par l'unité de surveillance (30) avec au moins un seuil d'énergie (54), et
un état de fonctionnement (130, 140) de l'affichage (21) est commandé en fonction d'un rapport entre la quantité d'énergie (50) et le seuil d'énergie (54),
l'accumulateur d'énergie (29) présentant, sur la base du seuil d'énergie (54) surveillé par l'unité de surveillance (30), une quantité d'énergie (50) qui est suffisamment grande pour assurer une transmission multiple du signal codé via la communication de données (40).

2. Procédé selon une des revendications précédentes,
**caractérisé en ce**
**que** l'affichage (21) prend un des états de fonctionnement suivants : un état de fonctionnement actif (140) ou un état de fonctionnement passif (130), en particulier un état du capteur d'identification mobile (10) étant affiché au moyen de l'affichage (21) dans l'état de fonctionnement actif (140) et l'affichage (21) étant dans un état non alimenté en énergie dans l'état de fonctionnement passif (130).

3. Procédé selon la revendication 2,
**caractérisé en ce**
**qu'**un changement réversible entre l'état de fonctionnement actif (140) et l'état de fonctionnement passif (130) est commandé au moyen de l'unité de surveillance (30) en fonction de la quantité d'énergie et/ou du seuil d'énergie (54) de l'accumulateur d'énergie (29).

4. Procédé selon une des revendications 2 ou 3,
**caractérisé en ce**
**que** dans l'état de fonctionnement passif (130), l'unité de surveillance (30) sépare indirectement ou directement l'affichage (21) de l'accumulateur d'énergie (29).

5. Procédé selon une des revendications précédentes,
**caractérisé en ce**
**que** dans un état de fonctionnement dormant de l'affichage (21), seulement une fraction de l'énergie est consommée, en particulier qu'un changement réversible entre l'état de fonctionnement actif (140) et l'état de fonctionnement dormant est commandé au moyen de l'unité de surveillance (30) en fonction d'un deuxième seuil d'énergie de l'accumulateur d'énergie (29), en particulier que l'affichage (21) est mis dans l'état de fonctionnement dormant après expiration d'un intervalle de temps.

6. Procédé selon une des revendications précédentes,
**caractérisé en ce**
**que** la communication de données (40) est établie par l'unité électronique (28) en cas d'activation d'un élément d'actionnement (25).

7. Procédé selon une des revendications 2 à 6,
**caractérisé en ce**
**que** le seuil d'énergie (54) est choisi de façon que l'unité électronique (28) établisse la communication de données (40) en fonction de l'activation de l'élément d'actionnement même dans l'état de fonctionnement passif (130).

8. Procédé selon une des revendications 2 à 6,
**caractérisé en ce**
**que** l'unité de surveillance (30) sépare indirectement ou directement l'unité électronique (28) de l'affichage (21) et de l'accumulateur d'énergie (29) dans l'état de fonctionnement passif (130), l'unité électronique (28) étant en particulier alimentée en énergie électrique par un deuxième accumulateur d'énergie dans l'état de fonctionnement passif (130).

9. Capteur d'identification mobile (10) pour un système de sécurité (71) d'un véhicule (70),
avec une unité électronique (28) pour la communication de données (40) avec une partie côté véhicule, en particulier le système de sécurité, un signal codé correspondant étant généré dans l'unité électronique (28), lequel est transmis à la partie côté véhicule via la communication de données (40),
un accumulateur d'énergie (29) servant à l'alimentation en énergie de l'unité électronique (28),
une unité de surveillance (30) surveillant une quantité d'énergie (50) de l'accumulateur d'énergie (29),
le capteur d'identification mobile (10) présentant un affichage (21),
**caractérisé en ce**
**que** la quantité d'énergie (50) de l'accumulateur d'énergie (29) peut être comparée par l'unité de surveillance (30) avec au moins un seuil d'énergie (54), et
un état de fonctionnement (130, 140) de l'affichage (21) peut être commandé en fonction d'un rapport entre la quantité d'énergie (50) et le seuil d'énergie (54),
l'accumulateur d'énergie (29) présentant, sur la base du seuil d'énergie (54) surveillé par l'unité de surveillance (30), une quantité d'énergie (50) qui est suffisamment grande pour assurer une transmission multiple du signal codé via la communication de données (40).

10. Capteur d'identifiication mobile (10) selon la revendication 9,
**caractérisé en ce**
**que** le capteur d'identification mobile (10) présente un deuxième accumulateur d'énergie.

11. Capteur d'identification mobile (10) selon une des revendications 9 ou 10,
**caractérisé en ce**
**que** l'accumulateur d'énergie (29) et/ou le deuxième accumulateur d'énergie est au moins un des éléments suivants : un accumulateur, une batterie, en particulier une batterie rechargeable, une cellule galvanique, une pile redox, une pile à combustible, un condensateur, en particulier un condensateur à double couche.

12. Capteur d'identification mobile (10) selon une des revendications 9 à 11,
**caractérisé en ce**
**que** l'unité de surveillance (30) et/ou l'unité électronique (28) présente au moins une des pièces suivantes : circuit intégré (IC), EPROM (Erasable Programmable Read-Only-Memory), microcontrôleur. FPGA (Field Programmable Gate Array), DSP (processeur de signaux numériques), PAL (Programmable Array Logic), ASIC (application specific integrated circuit), ASSP (Application Specific Standard Products).

13. Capteur d'identification mobile (10) selon une des revendications 9 à 12,
**caractérisé en ce**
**que** le capteur d'identification mobile (10) présente un élément de communication et l'élément de communication utilise au moins une des technologies suivantes ; Bluetooth, Infrared Data Association (IrDA), ZigBee, Bluejacking, Bluesnarfing, Bluebugging, Near Field Communication (NFC), Wireless Local Area Network (WLAN ; IEEE 802.11), WiMAX, Wibree, FireWire (IEEE 1394), USB (Universal Serial Bus), Wireless USB, HDMI (High Definition Multimedia Interface), Unilink, ATA/ATAPI (Advanced Technology Attachment with Packet Interface), IEEE 488, IEEE 1284, transmission de données par induction, transmission de données capacitive ou ultrasons.

14. Capteur d'identification mobile (10) selon une des revendications 9 à 13,
**caractérisé en ce**
**que** l'affichage (21) utilise au moins un des moyens suivants : une diode électroluminescente (LED), une diode électroluminescente organique (OLED), un affichage à cristaux liquide (LCD), un écran plasma, un tube cathodique, un Surface-Conduction Electron-Emitter Display (21) (SED) ou un écran à émission de champ (FED).

15. Capteur d'identification mobile (10) selon une des revendications 9 à 14,
**caractérisé en ce**
**que** le capteur d'identification mobile (10) présente au moins un élément d'actionnement (25), en particulier que l'élément d'actionnement (25) sert à entrer une information, laquelle information peut être affichée sur l'affichage (21).
